# EUROPEAN PATENT SPECIFICATION

(11) **EP 2 191 676 B1**
(45) Date of publication and mention of the grant of the patent: **24.02.2016**
(21) Application number: 07800784.6
(22) Date of filing: 24.08.2007
(51) Int. Cl.: H04W 72/04, H04W 72/12

(54) **Method for scheduling of uplink VoIP packets, network element and user equipment**
Verfahren zum Scheduling von Uplink-VoIP-Packeten, Netzwerkelement und Benutzergerät
Procédé de programmation de packets VoIP de liaison montante, élément de réseau et équipement d'utilisateur

(43) Date of publication of application: 02.06.2010
(73) Proprietor: ALCATEL LUCENT, 92100 Boulogne-Billancourt (FR)
(72) Inventor: ZHAO, Yan, Shanghai 201206 (CN); YANG, Tao, Shanghai 201206 (CN); LIU, Jin, Shanghai 201206 (CN)
(74) Representative: Wetzel, Emmanuelle
(86) International application number: PCT/CN2007/002565
(87) International publication number: WO 2009/026738

(56) References cited:
- WO-A2-02/09448
- US-A1- 2002 031 119
- US-A1- 2006 088 065
- US-B1- 6 898 195
- SAMSUNG: "Discussion on control signalling for persistent scheduling of VoIP", 3GPP DRAFT; R1-063275 PERSSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Riga, Latvia; 20061101, 1 November 2006 (2006-11-01), XP050103725, [retrieved on 2006-11-01]
- ALCATEL-LUCENT: "DL Control Signaling and Multiplexing for VoIP, 3GPP TSG RAN WG1 Meeting #48bis, R1-071721", 3RD GENERATION PARTNERSHIP PROJECT (3GPP); TECHNICALSPECIFICATION GROUP (TSG) RADIO ACCESS NETWORK (RAN); WORKINGGROUP 1 (WG1), XX, XX, no. 48bis, 26 March 2007 (2007-03-26), pages 1-4, XP002460800,
- RESEARCH IN MOTION: "Uplink VoIP scheduling with Fast Indication", 3GPP DRAFT; R2-071961, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kobe, Japan; 20070504, 4 May 2007 (2007-05-04), XP050134839, [retrieved on 2007-05-04]
- LEE H-J. ET AL: 'Analysis of bandwidth gain over various timer CU of AAL2 for voice traffic multiplexing' IEEE TRANSACTIONS ON VEHICULAR TECHNOLOGY vol. 54, no. 4, July 2005, XP011137452
- NOKIA: "Uplink Scheduling for VoIP", 3GPP DRAFT; R2-071460 VOIP UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Julian; 20070322, 22 March 2007 (2007-03-22), XP050134396, [retrieved on 2007-03-22]

## Description

### Field of the Invention

The present invention relates to the field of communication, and more particularly to scheduling resource in a packet network.

### Background of the Invention

In recent years, due to especially higher data rate and support to mobility, broadband wireless access techniques, for example IEEE 802.16e, have drawn much attention, and are competing with the existing mobile communication systems. Therefore, 3GPP started a project of 3G long term evolution in 2005, to provide a better support for the increasing requirement of operators and users with evolved access technique (E-UTRA, Evolved-UTRA) and access network (E-UTRAN), in order to achieve the object of keeping UMTS system a superior one in the next 10 years or even longer time.

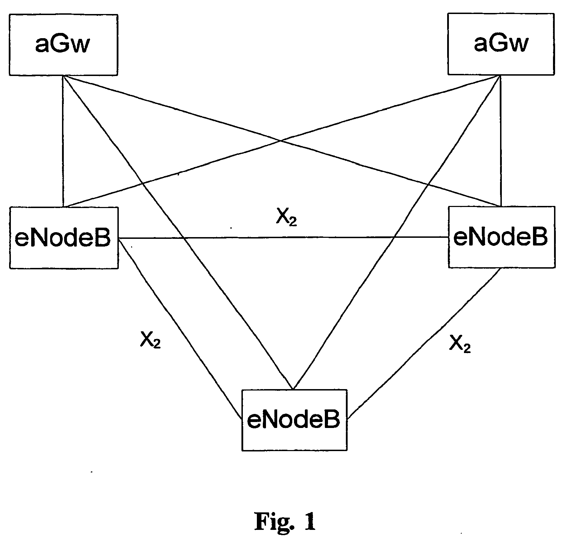

Figure 1 shows the architecture of a version R7 LTE network. In such a network, the IP transmission is adopted between eNodeBs (Evolved Universal Terrestrial Radio Access Network NodeB) at lower layer, and the eNodeBs are interconnected logically via X2 interfaces, thus forming a meshed network. Such a network architecture plan is mainly used for supporting the mobility of user equipments (UE) within the entire network, and ensure the seamless handover of users. Each eNodeB is connected to access gateway(s) (aGW) by means of a certain form of meshed connection or partly meshed connection. A eNodeB may be connected to a plurality of aGWs, and vice versa. The LTE network employs the techniques of OFDM, MIMO, HARQ, AMC etc. at physical layer.

In such a LTE system, there only exists packet domain, and the voice traffic is carried via VoIP. The voice traffic is the main traffic in current mobile communication systems, and tends towards being carried via IP. VoIP traffic has certain characteristics, such as smaller packet (generally with tens of bytes), substantially fixed arrival interval of packet and packet size, for example periodically generated for voice packet per 20ms during talk-spurt period and SID (silence descriptor) packet per 160ms during silent period.

In the downlink, OFDM may meet the requirements of data rate of 100Mbit/s and spectrum efficiency, and may implement a flexible bandwidth configuration from 1.25 to 20MHz. LTE follows the concept of HSDPA/HSUPA, i.e. obtaining a gain only by link adaptation and quick retransmission. The downlink modulation schemes of LTE include QPSK, 16QAM and 64QAM etc..

In uplink, SC-FDMA is employed, i.e. a base station allocates a single frequency to a UE for transmitting user's data per TTI (transmission time interval), and the data of different users is separated in frequency and time, so as to ensure the orthogonality among uplink carriers within a cell and avoid the interference among frequencies.

At present, there are some resource scheduling methods for LTE network, such as dynamic scheduling (DS), persistent scheduling (PS) and group scheduling (GS).

The dynamic scheduling means to schedule resource dynamically based on the channel condition. In downlink, the eNodeB allocates resource based on the amount of data in buffer, the channel condition etc.. In uplink, an uplink resource request message is sent first when a UE wants to send uplink data. The eNodeB allocates resource based on the received request message via an uplink resource allocation message Such a scheme has a better resource utilization and may adjust some parameters of MCS (modulation coding scheme) adaptively based on the channel condition. But it needs more bits for the scheduling request and the resource allocation information to achieve the adaptive adjustment, thus resulting in much signaling overhead.

If the dynamic scheduling is adopted for those smaller packets of VoIP traffic, i.e. a request and grant signaling per TTI, the signaling load will be much heavier. The overhead needs to be reduced for reaching a certain VoIP user amount in the LTE system. Hence, two optimized schemes are proposed, i.e. persistent scheduling and group scheduling.

A fully persistent scheduling is similar to the circuit switching allocation for VoIP, i.e. scheduling relatively fixed resource for the voice traffic once for all. This persistent scheduling is advantageous because of the reduced or avoided L1/L2 control signaling and simplicity. However, it has the lowest resource utilization among all scheduling methods, especially the resource unused by UE during silent period and unused HARP (Hybrid Automatic Repeat Request) retransmission resource: Moreover, since the time/frequency allocation is fixed and the MCS and resource selection is fixed during the whole persistent period configured when the call is set up, such a scheduling method lacks flexibility.

The group scheduling is to allocate resource from a set of resource blocks for a group of UEs. The numbers of resource block equals to the products of the numbers of UE and the average activity factor. The advantages of such a scheduling method are improved resource utilization and lower signaling overhead that the dynamic scheduling. However, this method has the following defects:
i) Difficult to manage the radio resource efficiently, especially because the average activity factor is hard to be estimated, which may cause extra delay to voice packet (at no resource case) or resource waste (at superfluous resource case).
ii) Lack of flexibility. Multi-rate codec will not be supported efficiently in a group; UE switching between groups or group reconfiguration are rather complex with a large amount of RRC (Radio Resource Control) signaling. The optimal performance is achieved only when the group is full, hence during the initial heating-up period the performance of group scheduling is low.
iii) Requiring different control channel structures, e.g. BITMAP signaling per TTI, from the normal L1/L2 control channel would be required.

To make efficient use of the resource, there is a need to find a trade-off between improving resource utilization and decreasing signaling overload. SAMSUNG: "Discussion on control signalling for persistent scheduling of VoIP", 3GPP DRAFT; R1-063275, 1 November 2006, comprises a discussion on control signalling for persistent scheduling of Voice over IP.

Another document, NOKIA: "Uplink Scheduling for VoIP", 3GPP DRAFT; R2-071460, 22 March 2007 (2007-03-22), discusses some scheduling alternatives for UL VoIP, such as dynamic scheduling and semi-persistent scheduling.

### Summary of the invention

To solve the above problem in the prior art, according to a aspect of the present invention, a method for scheduling resource in a packet network as set forth in claim 1 is proposed.

According another aspect of the present invention, a network element as set forth in claim 6 is proposed.

According to yet another aspect of the present invention, a user equipment as set forth in claim 10 is proposed.

Further embodiments are set forth in the dependent claims.

### Brief Description of the Drawings

These and many other features and advantages of the present invention will become apparent from the following description of the embodiments of the present invention with reference to the drawings, wherein:
- Fig.1 shows the architecture of a LTE network;
- Fig.2 is a flowchart of the method for scheduling resource according to an embodiment of the present invention;
- Fig.3 further illustrates the method for scheduling resource according to the embodiment of the present invention;
- Fig.4 illustrates how the UE is synchronized in state with the eNodeB;
- Fig.5 is a block diagram of the network element according to an embodiment of the present invention;
- Fig.6 is a block diagram of the UE according to an embodiment of the present invention.

### Detailed Description of the Invention

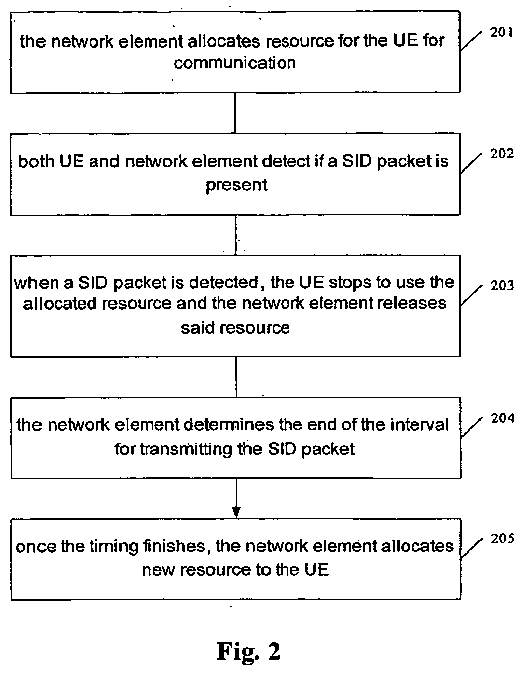

The present invention proposes a dual-state semi-persistent scheduling method for uplink VoIP in LTE. With reference to Figure 2, the method for scheduling resource according to an embodiment of the present invention is described. This method may be applied to the system shown in figure 1. The description of the above system will not be repeated herein.

As shown in Figure 2, firstly, in step 201, the network element allocates resource for the UE for communication Herein, said network element may be for example the eNodeB shown in Figure 1. In the present embodiment, any existing and future solution may be adopted for allocating resource, for example, but not exclusively eNodeB allocating resource for UE by means of the above-mentioned persistent scheduling method.

In step 202, both the UE and eNodeB detect if a SID packet (silence descriptor packet) is present, which may be performed for example by a detection means installed in UE and eNodeB. It should be noted that since the SID packet and the data packet such as the VoIP packet are encapsulated by RTP (Real-time Transport Protocol), RTP identifies at the corresponding indicator in the header of RTP to distinguish between SID packet and data packet. Furthermore, since the SID packet is relatively small (tens of bits) while the data packet has at least more than 100 bits (256 bits for 12.2kbps), they could also be distinguished from the size of packet. Therefore, the SID packet and the data packet could be identified at the PDCP packet data convergence sub-layer.

Next, in step 203, for the detected SID packet, the UE stops to use the allocated resource and the eNodeB releases said resource, which may be allocated to other UEs. In step 204, eNodeB determines the end of the interval for transmitting the SID packet, for example by a timer installed in the eNodeB. For example, a timing interval of 160ms may be set for the timer, such that the end of the interval for transmitting the SID packet could be determined when the timing finishes. Finally, in step 205, once the timing finishes, the eNodeB allocates new resource to the UE based on channel condition etc.. There exists also such a case in practice, i.e. the UE requesting transmitting data packet, for example the VoIP voice packet, before the timer finishes its timing. In this case, if the UE sends a resource allocation request to the eNodeB, the eNodeB allocates new resource for the UE when receiving said request, after the detection of SID packet in the above step 203, and before the timer of eNodeB finishes its timing.

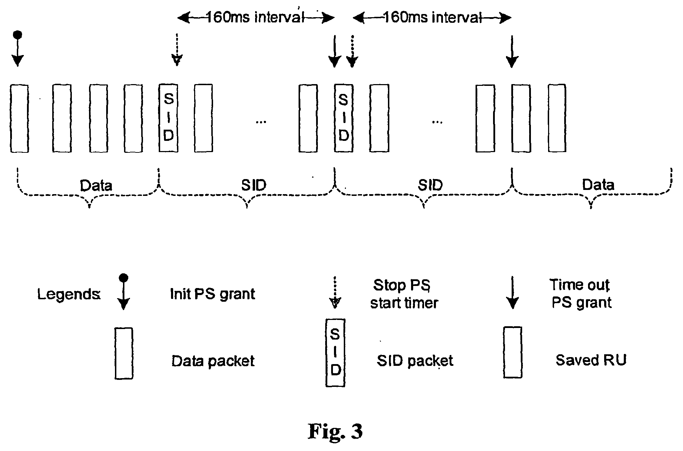

Figure 3 further illustrates the method for scheduling resource according to the embodiment of the present invention. A situation is shown in which the data packet and the SID packet are present alternately. It can be seen from the Figure 3 that, when a SID packet is present while the UE is communicating, meaning start of a silent period, the resource in the interval of 160ms following the SID packet could be saved, and this saved resource may be allocated to other UEs. Once the timing of 160ms finishes, the eNodeB allocates resource to said UE by the persistent scheduling method.

It should be appreciated that, the resource utilization may be improved when employing the method for scheduling resource of the present embodiment by allocating the remaining resource of the silent period of UE to other UEs. No new L1/L2 signaling is needed by using normal uplink scheduling grant signaling, and the grant signaling cost remains unchanged by using the persistent scheduling in the talk-spurt period. There is one grant per SID packet, such that each UE receives only an average of 3.125 grants signaling per second in the case of 0.5 activity factor.

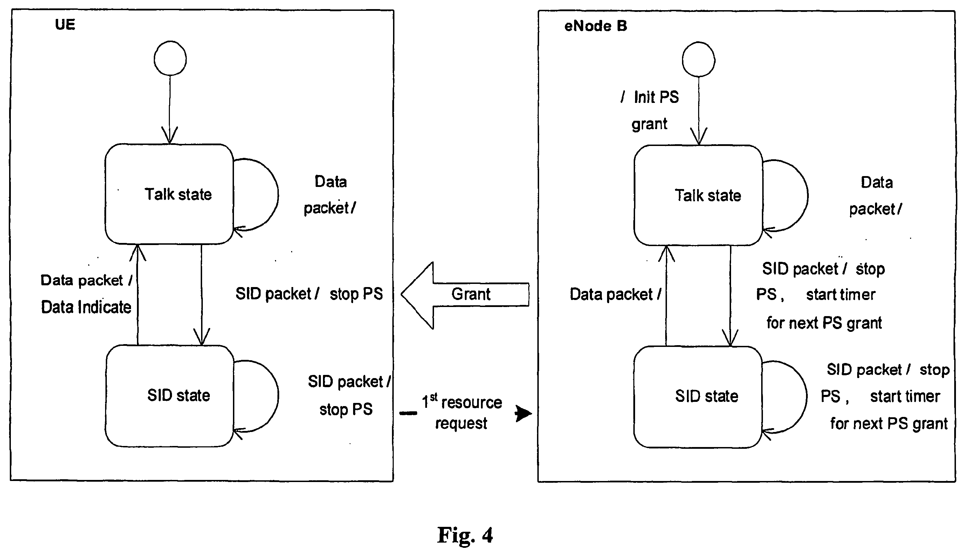

To save signaling cost, the method of the present embodiment synchronizes implicitly the UE and the eNodeB using grant synchronization state, to avoid resource allocation conflict among different UEs. This synchronization scheme makes eNodeB unnecessary to send a signaling to stop the last persistent grant before eNodeB allocates the resources assigned in the last persistent grant to other UEs. Figure 4 illustrates how the UE is synchronized in state with the eNodeB.

It can be seen from Figure 4 that, each UE has two states. One is talk-spurt state in which the UE is in talk-spurt period, the other is SID state in which the UE is in silence period. A state transition means transition from the state before receiving trigger event to the state after executing actions. The format description of state transition may be for example "Trigger event/Action 1, action 2, and so on after triggering", such as "SID packet/stop persistent scheduling" which means stopping the last persistent scheduling grant after receiving SID packet. "SID packet/stop persistent scheduling, start timer for next PS grant" means that the eNodeB stops the last persistent scheduling grant after receiving SID packet, then starts a timer to trigger a scheduler of eNodeB to generate a new persistent scheduling grant by the end of 160ms. "Data packet/data indication" means generating a data indication after receiving data packet for triggering a scheduler of UE to send a resource request to the eNodeB, and transit its state. It can be seen from the figure that, when a UE in the SID state detects a data packet, the UE sends a resource allocation request to an eNodeB which allocates new resource for the UE immediately upon receiving said request.

Thereby, the signaling overhead is reduced greatly by synchronizing UE with eNodeB to avoid resource allocation conflict among different UEs.

It should be appreciated that, using the method for scheduling resource according to the present invention, the resource utilization may be improved without increasing signaling cost by detecting automatically the presence of SID packet both at UE and at eNodeB, employing the persistent scheduling during the talk-spurt period and synchronizing the states of UE and eNodeB, and reallocating the remaining resource of UE during the silent period to other UEs.

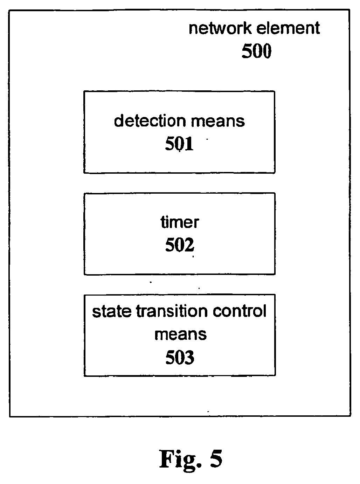

Based on the same inventive concept, according to another aspect of the present invention, a network element is proposed for exchanging signaling with UEs. The network element will be described in the following with reference to Figure 5.

Figure 5 is a block diagram of the network element 500 according to an embodiment of the present invention, which is for example eNodeB. The network element 500 includes a detection means 501, a timer 502 and a state transition control means 503. The detection means 501 is used for detecting the presence of SID packet or data packet when the UE is communicating. The timer 502 is used for starting timing when a SID packet is detected by the detection means 501. In the present embodiment, the timing period of the timer 502 may be set as 160ms. Referring to Figure 4 again, the state transition control means 503 is used for transiting the network element from the talk-spurt state to the SID state, and vice versa. The state transition is triggered by the trigger event as shown in Figure 4. The resource scheduling grant for the UE is stopped when a SID packet is detected by the detection means 501, and the timer 502 starts timing. The network element 500 allocates new resource for the UE, when the timer 502 finishes its timing, or when the UE requests the network element 500 to allocate resource to it before the finish of timing.

In implementation, the network element 500 of this embodiment as well as the detection means 501, the timer 502 and the state transition control means 503 it includes, may be implemented in software, hardware or a combination of them. For example, those skilled in the art are familiar with a variety of devices which may be used to implement these components, such as micro-processor, micro-controller, ASIC, PLD and/or FPGA etc.. The detection means 501, the timer 502 and the state transition control means 503 of the present embodiment may be either implemented as integrated into the network element 500, or implemented separately, and they may also be implemented separately physically but interconnected operatively.

In operation, said network element for exchanging signaling with UEs of the embodiment illustrated in connection with Figure 5, may improve the resource utilization without increasing signaling cost, by detecting automatically the presence of SID packet both at UE and at eNodeB, by employing the persistent scheduling during the talk-spurt period and synchronizing the states of UE and eNodeB, and by reallocating the remaining resource of UE during the silent period to other UEs.

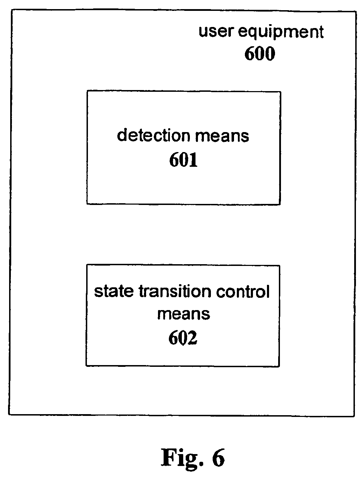

Based on the same inventive concept, according to yet another aspect of the present invention, a user equipment is proposed. The user equipment will be described in the following with reference to Figure 6.

Figure 6 is a block diagram of the UE 600 according to an embodiment of the present invention. The UE 600 includes a detection means 601 and a state transition control means 602. The detection means 601 is used for detecting the presence of SID packet or data packet when the UE is communicating. The state transition control means 602 is used for transiting the UE from talk-spurt state to SID state, and vice versa. The state transition is triggered by a trigger event as shown in Figure 4. When the detection means 601 detects a SID packet, the UE stops using the resource allocated by the network element. When the detection means 601 detects a data packet while the UE is in silent state, the UE sends a request for allocating resource to the network element.

In implementation, the UE 600 of this embodiment as well as the detection means 601 and the state transition control means 602 it includes, may be implemented in software, hardware or a combination of them. For example, those skilled in the art are familiar with a variety of devices which may be used to implement these components, such as micro-processor, micro-controller, ASIC, PLD and/or FPGA etc..

In operation, said UE of the embodiment illustrated in connection with Figure 6, may improve the resource utilization without increasing signaling cost, by detecting automatically the presence of SID packet both at UE and at eNodeB, by employing the persistent scheduling during the talk-spurt period and synchronizing the states of UE and eNodeB, and by reallocating the remaining resource of UE during the silent period to other UEs.

Although the exemplary embodiments of the method for scheduling resource, the network element for exchanging signaling with UEs and the UE of the present invention are described above in detail, the above embodiments are not exhaustive, and those skilled in the art can make numerous changes and modifications within the scope of the present invention. Therefore, the present invention is not limited to those embodiments, the scope of which is defined only by the appended claims.

## Claims

1. A method for scheduling resource in a packet network, wherein user equipments communicate therebetween using the resource allocated by a network element (500), said communication comprises talk-spurt periods during which data packets are transmitted and silent periods during which silence descriptor packets are transmitted, the method comprising: - said network element (500) allocates (201) resource for said user equipments for communication; - both said user equipment and said network element (500) detect (202) the presence of said silence descriptor packet; - upon detecting the presence of said silence descriptor packet by said user equipment (UE), said user equipment stops (203) using the allocated resource, and upon detecting the presence of said silence descriptor packet by said network element (500), said network element (500) releases the allocated resource and starts a timer (502) to trigger a scheduler of the network element (500) to generate a new persistent scheduling grant when the timer (502) is expired; - said network element (500) determines (204) the end of the interval for the transmission of said silence descriptor packet using the timer (502); - said network element (500) allocates (205) a new resource to said user equipment when said interval ends or when a request for allocating resource is received from said user equipment before the end of said interval.

2. The method according to claim 1, wherein said silence descriptor packet is transmitted once per 160ms during said silent period, and said data packet is transmitted once per 20ms during said talk-spurt period.

3. The method according to any of claims 1-2, wherein said network element (500) determines the end of the interval by timing.

4. The method according to any of claims 1-3, wherein the period of said timing is 160ms.

5. The method according to any of claims 1-4, further comprising said network element (500) reallocating the released resource to other user equipments, when said other user equipments request said network element (500) to allocate resource.

6. A network element (500) for exchanging signaling with user equipments, wherein said user equipments are configured to communicate therebetween using the resource allocated by the network element, said communication is based on packet switching and comprises talk-spurt periods during which data packets are transmitted and silent periods of said user equipment (600) during which silence descriptor packets are transmitted, the network element (500) comprising: - detection means (501) for detecting the presence of said silence descriptor packet or said data packet when said user equipment is communicating; - timer (502) adapted to start timing when said silence descriptor packet is detected to determine the end of the interval for transmitting said silence descriptor packet; - state transition control means (503) for changing said network element (500) from a talk-spurt state to a silent state when it detects said silence descriptor packet, or changing said network element (500) from the silent state to the talk-spurt state when it detects said data packet, wherein said network element (500) is configured to, when said silence descriptor packet is detected, release the allocated resource and start a timer (502) to trigger a scheduler of the network element (500) to generate a new persistent scheduling grant when the timer (502) is expired, and to allocate (205) a new resource to said user equipment when said interval ends or when a request for allocating resource is received from said user equipment before the end of said interval.

7. The network element (500) according to claim 6, wherein said silence descriptor packet is transmitted once per 160ms during said silent period, and said data packet is transmitted once per 20ms during said talk-spurt period.

8. The network element (500) according to any of claims 6-7, wherein when said network element (500) changes from said talk-spurt state to said silent state, it stops the resource scheduling grant for said user equipment, and said timer (502) start timing; and when said network element (500) changes from said silent state to said talk-spurt state, it allocates new resource for said user equipment.

9. The network element (500) according to any of claims 6-8, wherein the period of said timing is 160ms.

10. A user equipment (600), wherein said user equipment (600) is configured to communicate with other user equipments using the resource allocated by network elements, said communication is based on packet switching and comprises talk-spurt periods during which data packets are transmitted and silent periods of said user equipment (600) during which silence descriptor packets are transmitted, the user equipment (600) comprising: - detection means (601) for detecting the presence of said silence descriptor packet or said data packet when said user equipment is communicating; - state transition control means (602) for changing said user equipment from a talk-spurt state to a silent state when it detects said silence descriptor packet, or changing said user equipment from the silent state to the talk-spurt state when it detects said data packet, wherein said user equipment is configured to stop (203) using the allocated resource when it detects said silence descriptor packet and receive a new persistent scheduling grant for the transmission of the SID packet.

11. The user equipment (600) according to claim 10, wherein said silence descriptor packet is transmitted once per 160ms during said silent period, and said data packet is transmitted once per 20ms during said talk-spurt period.

12. The user equipment (600) according to any of claims 10-11, wherein when said user equipment changes from said talk-spurt state to said silent state, it stops using the resource allocated by said network element, and when said user equipment changes from said silent state to said talk-spurt state, it sends a request for allocating resource to said network element.

## Patentansprüche

1. Verfahren für das Scheduling von Ressourcen in einem Paketnetzwerk, wobei die Benutzergeräte mit dem Netzwerk unter Verwendung der Ressource kommunizieren, die von einem Netzwerkelement (500) zugewiesen wird, wobei besagte Kommunikation Sprachabschnitts-Perioden umfasst, während derer Datenpakete übermittelt werden, und Sprechpausen-Perioden, während derer Stiliedeskriptor-Pakete übertragen werden, wobei das Verfahren umfasst:
- Zuweisen (201) von Ressourcen für die Kommunikation an besagte Benutzergeräte durch das Netzwerkelement (500);
- Detektion (202) der Präsenz besagten Stilledeskriptor-Pakets durch besagtes Benutzergerät und besagtes Netzwerkelement (500);
- auf Detektion der Präsenz besagten Stilledeskriptor-Pakets durch besagtes Benutzergerät (UE) hin das Einstellen der Nutzung (203) der zugewiesenen Ressource durch das Benutzergerät und auf die Detektion der Präsenz besagten Stiliedeskriptor-Pakets durch besagtes Netzwerkelement (500) hin die Freigabe der zugewiesenen Ressource durch das Netzwerkelement (500) und das Starten eines Timers (502) zum Auslösen eines Schedulers des Netzwerkelements (500) zum Zweck des Generierens eines neuen ständigen Scheduling-Bewilligung nach Ablauf des Timers (502);
- Bestimmen (204) des Endes des Intervalls für das Übermitteln besagten Stilledeskriptor-Pakets durch besagtes Netzwerkelement (500) unter Verwendung des Timers (502);
- Zuordnung (205) einer neuen Ressource zu besagtem Benutzergerät durch besagtes Netzwerkelement (500), wenn besagtes Intervall endet oder wenn besagtes Benutzergerät vor dem Ende besagten Intervalls eine Anfrage zur Zuordnung einer Ressource empfängt.

2. Verfahren nach Anspruch 1, wobei besagtes Stilledeskriptor-Paket im Verlauf besagter Sprechpausen-Periode einmal alle 160 ms und besagtes Datenpaket im Verlauf besagter Sprachabschnitts-Periode einmal alle 20 ms übertragen wird.

3. Verfahren nach einem jeglichen der Ansprüche 1 bis 2, wobei besagtes Netzwerkelement (500) das Ende des Intervalls durch Timing bestimmt.

4. Verfahren nach einem jeglichen der Ansprüche1 bis 3, wobei die Periode besagten Timings 160 ms beträgt.

5. Verfahren nach einem beliebigen der Ansprüche 1 bis 4, weiterhin die Neuzuweisung der freigegebenen Ressource an andere Benutzergeräte durch besagtes Netzwerkelement (500) umfassend, wenn besagtes andere Benutzergerät bei besagtem Netzwerkelement (500) um die Zuweisung einer Ressource anfragt.

6. Netzwerkelement (500) für den Austausch von Signalisierungen mit anderen Benutzergeräten, wobei besagte Benutzergeräte konfiguriert sind für die Kommunikation untereinander unter Verwendung der vom Netzwerkelement zugewiesenen Ressourcen, wobei besagte Kommunikation auf Paketvermittlung basiert und Sprachabschnitts-Perioden umfasst, während welcher Datenpakete übermittelt werden, sowie Sprechpausen-Perioden besagten Benutzergeräts (600), während welcher Stilledeskriptor-Pakete übermittelt werden, wobei das Netzwerkelement (500) Folgendes umfasst:
- Erkennungsmittel (501) für das Erkennen der Präsenz besagten Stilledeskriptor-Pakets oder besagter Datenpakete dann, wenn besagtes Benutzergerät kommuniziert;
- einen Timer (502), der dafür ausgelegt ist, dann mit dem Timen zu beginnen, wenn besagtes Stilledeskriptor-Paket festgestellt wird, um das Ende des Intervalls für die Übermittlung besagten Stilledeskriptor-Pakets zu bestimmen;
- Mittel für die Steuerung der Statusübergänge (503) für das Umstellen besagten Netzwerkelements (500) von einem Sprachabschnitts-Status auf einen Stille-Status, wenn das Stilledeskriptor-Paket festgestellt wird, oder das Umstellen besagten Netzwerkelements (500) vom Stille-Status auf den Sprachabschnitts-Status, wenn besagtes Datenpaket festgestellt wird, wobei besagtes Netzwerkelement (500) dafür konfiguriert ist, auf die Detektion besagten Stilledeskriptor-Pakets hin die zugewiesene Ressource freizugeben und einen Timer (502) zu starten, um einen Scheduler des Netzwerkelements (500) auszulösen, um eine neue ständige Schedulingbewilligung zu generieren, wenn der Timer (502) abgelaufen ist, sowie für das Zuweisen (205) einer neuen Ressource zu besagtem Benutzergerät, wenn besagtes Intervall endet oder wenn von besagtem Benutzergerät vor dem Ende besagten Intervalls eine Anfrage für das Zuweisen einer Ressource empfangen wird.

7. Netzwerkelement (500) nach Anspruch 6, wobei besagtes Stilledeskriptor-Paket im Verlauf besagter Sprechpausen-Periode einmal alle 160 ms und besagtes Datenpaket im Verlauf besagter Sprachabschnitts-Periode einmal alle 20 ms übertragen wird.

8. Netzwerkelement (500) nach einem beliebigen der Ansprüche 6 bis 7, wobei besagtes Netzwerkelement (500) dann, wenn es von besagtem Sprachabschnitts-Status auf besagten Stille-Status umstellt, die Ressourcen-Scheduling-Bewilligung für besagtes Benutzergerät stoppt und besagter Timer (502) mit dem Timen beginnt; und wobei besagtes Netzwerkelement (500) dann, wenn es von besagtem Stille-Status in besagten Sprachabschnitts-Status wechselt, besagtem Benutzergerät eine neue Ressource zuweist.

9. Das Netzwerkelement (500) nach einem jeglichen der Ansprüche 6 bis 8, wobei die Periode besagten Timings 160 ms beträgt.

10. Benutzergerät (600), wobei besagtes Benutzergerät (600) konfiguriert ist für die Kommunikation mit anderen Benutzergeräten unter Verwendung der vom Netzwerkelement zugewiesenen Ressourcen, wobei besagte Kommunikation auf Paketvermittlung basiert und Sprachabschnitts-Perioden umfasst, während welcher Datenpakete übermittelt werden, sowie Sprechpausen-Perioden besagten Benutzergeräts (600), während welcher Stilledeskriptor-Pakete übermittelt werden, wobei das Benutzergerät (600) Folgendes umfasst:
- Erkennungsmittel (601) für das Erkennen der Präsenz besagten Stilledeskriptor-Pakets oder besagter Datenpakete dann, wenn besagtes Benutzergerät kommuniziert;
- Statusübergangs-Steuerungsmittel (602) für das Umstellen besagten Benutzergeräts von einem Sprachabschnitts-Status auf einen Stille-Status, wenn es besagtes Stilledeskriptor-Paket detektiert, oder das Umstellen besagten Benutzergeräts von dem Stille-Status auf dem Sprachabschnitts-Status, wenn es besagtes Datenpaket detektiert, wobei besagtes Benutzergerät konfiguriert ist für das Einstellen (203) der Benutzung der zugewiesenen Ressource, wenn es besagtes Stilledeskriptor-Paket detektiert, sowie für den Empfang einer neuen ständigen Schedulingbewilligung für die Übermittlung des SID-Pakets.

11. Benutzergerät (600) nach Anspruch 10, wobei besagtes Stilledeskriptor-Paket im Verlauf besagter Sprechpausen-Periode einmal alle 160 ms und besagtes Datenpaket im Verlauf besagter Sprachabschnitts-Periode einmal alle 20 ms übertragen wird.

12. Benutzergerät (600) nach einem jeglichen der Ansprüche 10 bis 11, wobei besagtes Benutzergerät dann, wenn es von besagtem Sprachabschnitts-Status in besagten Stille-Status wechselt, die Nutzung der von besagtem Netzwerkelement zugewiesenen Ressource einstellt und wobei besagtes Benutzergerät dann, wenn es von besagtem Stille-Status in besagten Sprachabschnitts-Status wechselt, eine Anfrage für die Zuweisung einer Ressource für besagtes Netzwerfcelement sendet.

## Revendications

1. Procédé pour ordonnancer les ressources dans un réseau en paquets, selon lequel des équipements d'utilisateurs communiquent entre eux en utilisant la ressource attribuée par un élément de réseau (500), ladite communication comprenant des périodes de rafale de parole durant lesquelles des paquets de données sont transmis et des périodes de silence durant lesquelles des paquets descripteurs de silence sont transmis, le procédé comprenant : - ledit élément de réseau (500) attribue (201) la ressource pour lesdits équipements d'utilisateur pour la communication ; - ledit équipement d'utilisateur et ledit élément de réseau (500) détectent (202) tous deux la présence dudit paquet descripteur de silence ; - sur détection dudit paquet descripteur de silence par ledit équipement d'utilisateur (UE), ledit équipement d'utilisateur cesse (203) d'utiliser la ressource attribuée et, sur détection de la présence dudit paquet descripteur de silence par ledit élément de réseau (500), ledit élément de réseau (500) libère la ressource attribuée et démarre un temporisateur (502) destiné à déclencher un ordonnanceur de l'élément de réseau (500) pour générer une nouvelle autorisation d'ordonnancement persistante lorsque le temporisateur (502) a expiré ; - ledit élément de réseau (500) détermine (204) la fin de l'intervalle pour la transmission dudit paquet descripteur de silence en utilisant le temporisateur (502) ; - ledit élément de réseau (500) attribue (205) une nouvelle ressource audit équipement d'utilisateur lorsque ledit intervalle se termine ou lorsqu'une demande d'attribution de ressource est reçue de la part dudit équipement d'utilisateur avant la fin dudit intervalle.

2. Procédé selon la revendication 1, selon lequel ledit paquet descripteur de silence est transmis une fois toutes les 160 ms pendant ladite période de silence, et ledit paquet de données est transmis une fois toutes les 20 ms pendant ladite période de rafale de parole.

3. Procédé selon l'une quelconque des revendications 1 et 2, selon lequel ledit élément de réseau (500) détermine la fin de l'intervalle par temporisation.

4. Procédé selon l'une quelconque des revendications 1 à 3, selon lequel la période de ladite temporisation est de 160 ms.

5. Procédé selon l'une quelconque des revendications 1 à 4, comprenant en outre l'étape de réattribuer par ledit élément de réseau (500) la ressource libérée à d'autres équipements d'utilisateur lorsque lesdits autres équipements d'utilisateur demandent audit élément de réseau (500) d'attribuer une ressource.

6. Élément de réseau (500) pour échanger de la signalisation avec des équipements d'utilisateur, dans lequel lesdits équipements d'utilisateur sont configurés pour communiquer entre eux en utilisant la ressource attribuée par l'élément de réseau, ladite communication s'appuyant sur la commutation de paquets et comprenant des périodes de rafale de parole durant lesquelles des paquets de données sont transmis et des périodes de silence dudit équipement d'utilisateur (600) durant lesquelles des paquets descripteurs de silence sont transmis, l'élément de réseau (500) comprenant : - des moyens de détection (501) pour détecter la présence dudit paquet descripteur de silence ou dudit paquet de données lorsque ledit équipement d'utilisateur est en train de communiquer ;-un temporisateur (502) adapté pour démarrer la temporisation lorsque ledit paquet descripteur de silence est détecté afin de déterminer la fin de l'intervalle pour transmettre ledit paquet descripteur de silence ; - des moyens de commande de transition d'état (503) pour modifier ledit élément de réseau (500) d'un état de rafale de parole en un état de silence lorsqu'il détecte ledit paquet descripteur de silence, ou modifier ledit élément de réseau (500) de l'état de silence en l'état de rafale de parole lorsqu'il détecte ledit paquet de données, ledit élément de réseau (500) étant configuré pour, lorsque ledit paquet descripteur de silence est détecté, libérer la ressource attribuée et démarrer le temporisateur (502) destiné à déclencher un ordonnanceur de l'élément de réseau (500) pour générer une nouvelle autorisation d'ordonnancement persistante lorsque le temporisateur (502) a expiré, et attribuer (205) une nouvelle ressource audit équipement d'utilisateur lorsque ledit intervalle se termine ou lorsqu'une demande d'attribution de ressource est reçue de la part dudit équipement d'utilisateur avant la fin dudit intervalle.

7. Élément de réseau (500) selon la revendication 6, dans lequel ledit paquet descripteur de silence est transmis une fois toutes les 160 ms pendant ladite période de silence, et ledit paquet de données est transmis une fois toutes les 20 ms pendant ladite période de rafale de parole.

8. Élément de réseau (500) selon l'une quelconque des revendications 6 et 7, dans lequel, lorsque ledit élément de réseau (500) change dudit état de rafale de parole en ledit état de silence, il met fin à l'autorisation d'ordonnancement de ressource pour ledit élément d'utilisateur, et ledit temporisateur (502) démarre la temporisation ; et lorsque ledit élément de réseau (500) change dudit état de silence en ledit état de rafale de parole, il attribue une nouvelle ressource pour ledit équipement d'utilisateur.

9. Élément de réseau (500) selon l'une quelconque des revendications 6 à 8, dans lequel la période de ladite temporisation est de 160 ms.

10. Équipement d'utilisateur (600), dans lequel ledit équipement d'utilisateur (600) est configuré pour communiquer avec d'autres équipements d'utilisateur en utilisant la ressource attribuée par des éléments de réseau, ladite communication s'appuyant sur la commutation de paquets et comprenant des périodes de rafale de parole durant lesquelles des paquets de données sont transmis et des périodes de silence dudit équipement d'utilisateur (600) durant lesquelles des paquets descripteurs de silence sont transmis, l'équipement d'utilisateur (600) comprenant: - des moyens de détection (601) pour détecter la présence dudit paquet descripteur de silence ou dudit paquet de données lorsque ledit équipement d'utilisateur est en train de communiquer; - des moyens de commande de transition d'état (602) pour modifier ledit équipement d'utilisateur d'un état de rafale de parole en un état de silence lorsqu'il détecte ledit paquet descripteur de silence, ou modifier ledit équipement d'utilisateur de l'état de silence en l'état de rafale de parole lorsqu'il détecte ledit paquet de données, ledit équipement d'utilisateur étant configuré pour cesser (203) d'utiliser la ressource attribuée lorsqu'il détecte ledit paquet descripteur de silence et recevoir une nouvelle autorisation d'ordonnancement persistante pour la transmission du paquet SID.

11. Équipement d'utilisateur (600) selon la revendication 10, dans lequel ledit paquet descripteur de silence est transmis une fois toutes les 160 ms pendant ladite période de silence, et ledit paquet de données est transmis une fois toutes les 20 ms pendant ladite période de rafale de parole.

12. Équipement d'utilisateur (600) selon l'une quelconque des revendications 10 et 11, dans lequel, lorsque ledit équipement d'utilisateur change dudit état de rafale de parole en ledit état de silence, il cesse d'utiliser la ressource attribuée par ledit élément de réseau, et lorsque ledit équipement d'utilisateur change dudit état de silence en ledit état de rafale de parole, il envoie une demande d'attribution de ressource audit élément de réseau.
